# EUROPEAN PATENT SPECIFICATION

(11) **EP 4 011 698 B1**
(45) Date of publication and mention of the grant of the patent: **13.03.2024**
(21) Application number: 20212639.7
(22) Date of filing: 09.12.2020
(51) Int. Cl.: B60P 1/64

(54) **A HOOKLOADER AND METHOD OF OPERATING THE SAME**
HAKENLADEGERÄT UND VERFAHREN ZUM BETRIEB DESSELBEN
CHARGEUR À CROCHET ET SON PROCÉDÉ DE FONCTIONNEMENT

(43) Date of publication of application: 15.06.2022
(73) Proprietor: Hyva Holding BV, 2408 AK Alphen aan den Rijn (NL)
(72) Inventor: SHARMA, Rahul, 2408 AK Alphen aan den Rijn (NL); KHURSHIDI, Ammar, 7903 BM Hoogeveen (NL); PORTILLA, Pablo, 2408 AK Alphen aan den Rijn (NL)
(74) Representative: Haseltine Lake Kempner LLP

(56) References cited:
- EP-A1- 3 170 696
- EP-A1- 3 663 591
- WO-A1-90/14250
- DE-A1- 2 903 462
- US-A- 5 542 807

## Description

The present invention relates to a method of operating a hookloader and a hookloader. In particular, it relates to controlling a latch on a hook of a hookloader.

Hookloaders typically comprise a hook for attaching to and picking up a container. The hook often comprises a latch to open and close the hook. The opening and closing of the hook is typically achieved by an operator manually controlling the opening and closing of the hook or by gravity. However, this can result in the latch unlocking at inconvenient or dangerous times.

DE 29 03 462 discloses a security jaw for lifting a skip onto a lorry which has a weighted retaining cam whose eccentrically mounted weight holds it in the closed position in the transport setting of the lifting arm. The cam swings between two stops with the weight positioned so that it opens the jaw when the lifting arm is inclined downwards.

According to a first aspect, there is provided a method of operating a hookloader, the hookloader comprising a chassis for receiving a container, a boom arm pivotably moveable with respect to the chassis, with a linear actuator disposed therebetween and actuatable to pivot the boom arm, the boom arm comprising a hook having a hook body defining an opening for hooking the container, the hook comprising a latch configured to lock to close the opening of the hook, or to unlock to open the opening of the hook, the method comprising: receiving an inclination parameter, from a sensor, relating to the inclination of the boom arm; and controlling the latch of the hook to lock or unlock based on the inclination parameter.

Control of the latch may be automatic, and require no manual intervention.

The latch may be controlled by actuation of a latch actuator. The latch may comprise controlling the latch actuator to extend or retract or controlling the latch actuator to rotate.

The latch actuator may comprise a linear actuator or a rotary actuator. The latch actuator may be a single acting actuator. A single acting linear or rotary actuator may have a biasing mechanism configured to bias the actuator in a retraction direction (i.e. a direction opposing an actuation direction), such as a single acting spring return pneumatic actuator.

The inclination parameter may be received from an inclination switch mounted on the boom arm which is configured to output a digital signal. The inclination parameter may be received from an inclination sensor mounted on the boom arm. The inclination parameter may be a first inclination parameter, and the method may include receiving a second inclination parameter relating to the inclination of the chassis. The first inclination parameter may be calibrated based on the second inclination parameter to identify the inclination of the boom arm relative to the chassis.

The inclination parameter may be received from an inductive sensor mounted to the chassis. The inclination parameter may be received from an extension sensor in the linear actuator configured to output a signal indicative of the extension of the linear actuator.

The linear actuator may be a hydraulic cylinder.

Controlling the latch to lock or unlock may comprise controlling a valve disposed between the latch actuator and a pressurised fluid source in a first fluid line, based on the inclination parameter. A manual pushbutton may be provided which, when actuated, manually controls the latch to unlock, by providing pressurised fluid to the latch actuator either by controlling the valve to open or by other means, such as through a different fluid line to the valve.

According to a second aspect, there is provided a hookloader comprising: a chassis for receiving a container, and a boom arm pivotably coupled to the chassis, with a linear actuator disposed between the chassis and the boom arm and actuatable to pivot the boom arm, the boom arm comprising a hook having a hook body defining an opening for hooking the container, the hook comprising a latch which is configured to lock to close the opening of the hook, and to unlock to open the opening of the hook; a sensor configured to generate an inclination parameter relating to the inclination of the boom arm; and a controller configured to operate the hookloader using the method according to the first aspect.

The hook may comprise a latch actuator which is configured to extend and retract to control the latch to lock or unlock.

The latch may be elongate and pivotably coupled to the hook body at a central portion of the latch. The latch may be pivotably attached to the latch actuator at a first end of the latch, and a second end of the latch may be configured to close the opening of the hook, such that extension of the latch actuator unlocks the latch, and retraction of the latch actuator locks the latch.

The hook may comprise a latch actuator which is configured to rotate to control the latch to lock or unlock.

The hookloader may comprise an inclination switch mounted on the boom arm, and configured to generate the inclination parameter. The hookloader may comprise an inductive sensor mounted to the chassis configured to generate the inclination parameter. The hookloader may comprise an extension sensor mounted in the linear actuator which is configured to output a signal indicative of the extension of the linear actuator to generate the inclination parameter.

The hookloader may comprise an inclination sensor mounted on the boom arm, and configured to generate the inclination parameter.

The controller may be configured to control the hookloader using the method according to the first aspect, wherein the inclination sensor may be a first inclinometer configured to generate the first inclination parameter. The hookloader may comprise a second inclinometer mounted on the chassis and configured to generate the second inclination parameter relating to the inclination of the chassis.

The hookloader may comprise a fluid circuit comprising a valve disposed between a pressurised fluid source and the latch actuator in a first fluid line. The valve may be controller by the controller to selectively permit fluid flow through the first fluid line from the pressurised fluid source to the latch actuator. The valve may be a solenoid valve. The fluid circuit may comprise a second fluid line, parallel to the first fluid line, and comprising a pushbutton valve disposed between the pressurised fluid source and the latch actuator. The pushbutton valve may be actuated to permit fluid flow from the pressurised source to the latch actuator through the second fluid line. A shuttle valve may be disposed at a point where the first fluid line and second fluid line meet to selectively permit fluid flow to the latch actuator through one of the first fluid line and the second fluid line at any one time.

The invention may comprise any combination of the features and/or limitations referred to herein, expect combinations of such features as are mutually exclusive.

Embodiments of the invention will now be described, by way of example only, with reference to the accompanying drawings, of which:
Figures 1 and 2 schematically show a first example hookloader arranged to pick up a container;
Figure 3a schematically shows a second example hookloader;
Figure 3b schematically shows a third example hookloader;
Figure 3c schematically shows a fourth example hookloader;
Figures 4a and 4b schematically show an example hook of a hookloader;
Figure 5 shows an example fluid circuit diagram for controlling a latch of the hook; and
Figure 6 is a flow chart showing steps of a method of operating the hookloader.

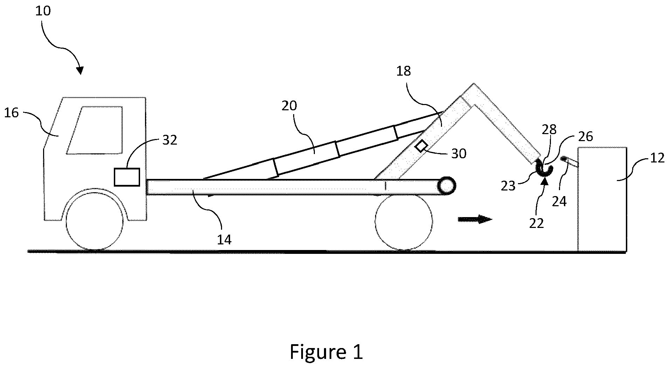

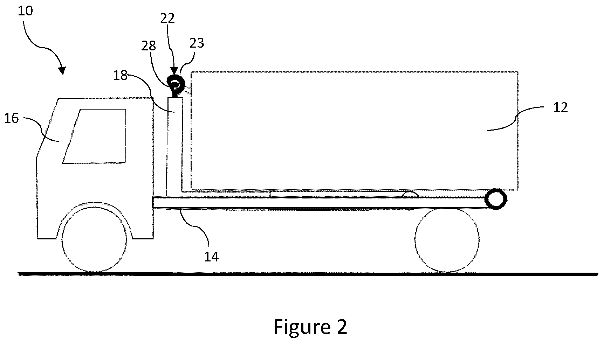

**Figures 1** **and** **2** schematically show a side view of a hookloader 10 and a container 12 to be picked up by the hookloader 10. In Figure 1 the hookloader 10 is in a pickup configuration, and in Figure 2 the hookloader 10 is in a loaded configuration.

The hookloader 10 comprises a chassis 14, for receiving the container 12, and a cab 16 at the front of the chassis 14 (which is shown on the Figures as the left side). In Figure 1, the container 12 is located at the back of the chassis 14 (shown in the Figures as the right side). In Figure 2, the container 12 is loaded on the chassis 14, in other words, the container 12 is received on the chassis 14.

The hookloader 10 further comprises a boom arm 18 which is pivotably moveable with respect to the chassis 14 between a pick-up position, as shown in Figure 1, and a loaded position, as shown in Figure 2. In this example, the boom arm 18 comprises a first section, and a second section orthogonal to the first section (i.e. a right-angled arm). In some examples, the boom arm may be an articulated boom arm.

A linear actuator 20 is disposed between the boom arm 18 and the chassis 14, and is actuatable to pivot the boom arm 18 between the loaded position and the pick-up position. In this example, the linear actuator 20 is a hydraulic cylinder. It will be appreciated that, in other examples, any suitable linear actuator may be used to pivot the boom arm.

In the loaded position, the first section of the boom arm 18 is parallel to the chassis 14 so that the container 12 can be received on the first section in the loaded position. In the pick-up position, the first section is pivoted from the loaded position towards the back of the chassis 14, so that the second section extends beyond the back of the chassis 14.

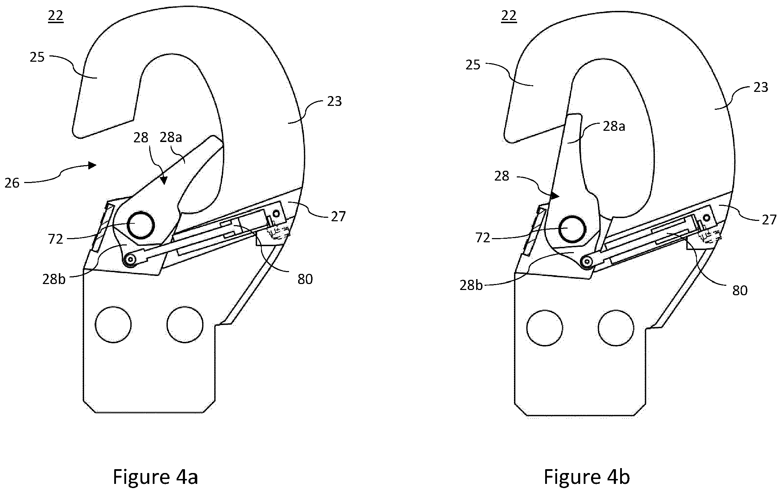

The boom arm 18 comprises a hook 22 comprising a hook body 23 which defines an opening 26 for hooking the container 12. The container comprises a bar 24, and the hook 22 is configured to receive the bar 24 to hold the container 12. The hook 22 further comprises a latch 28 which is configured to close the opening 26 of the hook body 23 by locking, or to open the opening 26 of the hook body 23 by unlocking. The mechanism for this is described in more detail with reference to Figures 4a and 4b.

In the pick-up configuration, as shown in Figure 1, the linear actuator 20 is fully extended so that the boom arm 18 is pivoted towards the back of the chassis 14, and the hook 22 is aligned with the bar 24 of the container 12, or hooked to the bar 24 of the container 12. In the loaded configuration, as shown in Figure 2, the linear actuator 20 is fully retracted so that the boom arm 18 is nestled in the chassis 14 with the hook 22 close to the cab 16 (i.e. close to the front of the chassis 14). Movement of the boom arm 18 from the pick-up position to the loaded position when the bar 24 of the container is held in the hook 22 loads the container 12 onto the chassis 14 of the hookloader 10. When the container 12 is loaded on the chassis 14, movement of the boom arm 18 from the loaded position to the pick-up position unloads the container 12 from the chassis 14.

In Figure 1, the latch 28 is unlocked such that the opening 26 of the hook body 23 is open, and in Figure 2 the latch 28 is locked such that the opening 26 of the hook body 23 is closed. Closing the opening 26 of the hook body 23 ensures that the container 12 cannot be inadvertently released from the hook 22.

In this example, the hookloader 10 further comprises a sensor 30 which is configured to generate an inclination parameter relating to the inclination of the boom arm 18. In this example, the sensor 30 is an inclination switch which is disposed on the boom arm 18. In other examples, the sensor may be an inclination sensor disposed on the boom arm.

The hookloader 10 comprises a controller 32 which is configured to automatically control the latch 28 of the hook 22 to lock and unlock during loading and unloading of the container 12, to thereby control the closure of the opening 26 of the hook body 23. It is important during loading and unloading of the container 12 that the hook 22 is locked when the boom arm 18 is at an optimal angle to ensure that the container 12 cannot inadvertently unhook from the hook 22. The optimal angle may different between different hookloaders. Locking the latch 28 automatically, without the need for manual intervention, can improve the safety of the hookloader 10.

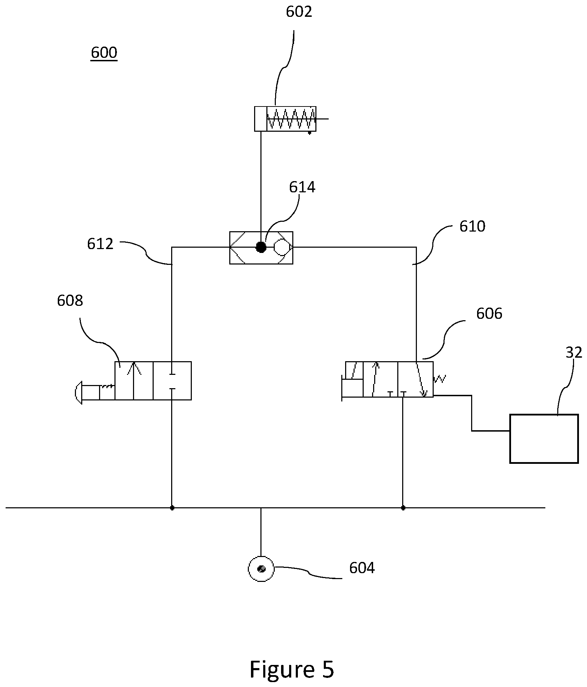

The controller 32 is configured to receive signals in the form of an inclination parameter from the sensor 30 and to control the latch 28 to lock or unlock automatically based on these inclination parameters, as will be described in more detail with reference to Figure 5.

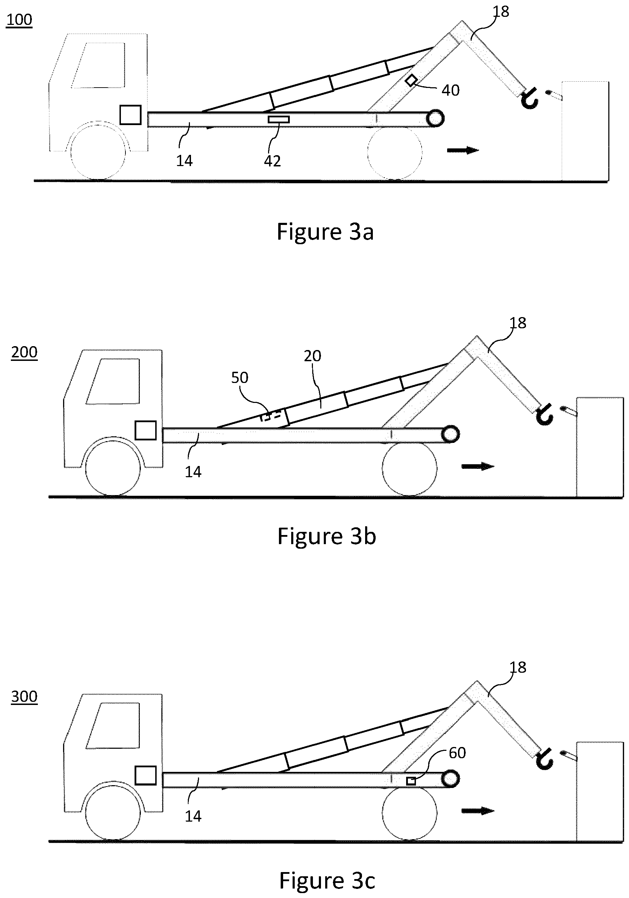

**Figure 3a** shows a second example of hookloader 100, **Figure 3b** shows a third example hookloader 200, and **Figure 3c** shows a fourth example hookloader 300. The second, third and fourth example hookloaders 100, 200, 300 are similar to the first example hookloader 10, and differ only in comprising a different sensor arrangement which is configured to generate an inclination parameter relating to the inclination of the boom arm 18.

In Figure 3a, the hookloader 100 comprises a first inclination sensor 40 mounted on the boom arm 18 and configured to generate a first inclination parameter relating to the inclination of the boom arm 18. The second example hookloader 100 also comprises a second inclination sensor 42 mounted on the chassis 14 and configured to generate a second inclination parameter relating to the inclination of the chassis 14. The first inclination parameter can therefore be calibrated with the second inclination parameter to determine the inclination of the boom arm 18 with respect to the chassis 14. Using the inclination of the boom arm 18 relative to the chassis 14 to control the locking and unlocking of the hook 22 means that the hookloader 100 can be used reliably on inclined ground.

In Figure 3b, the third example hookloader 200 comprises an extension sensor 50 mounted in the linear actuator 20 which is configured to output a signal indicative of the extension of the linear actuator 20 to generate an inclination parameter relating to the inclination of the boom arm 18 relative to the chassis 14.

In Figure 3c, the hookloader 300 comprises an inductive sensor 60 mounted to the chassis 14. The inductive sensor 60 is configured to generate a signal indicative of the distance of a part of the boom arm 18 from the chassis 14, to thereby generate an inclination parameter relating to the inclination of the boom arm 18 relative to the chassis 14.

**Figures 4a and 4b** show the hook 22 of the example hookloaders 10, 100, 200, 300 in more detail. Figure 4a shows the hook 22 in an unlocked configuration and Figure 4b shows the hook 22 in a locked configuration.

The hook body 23 comprises a curved section with a re-entrant geometry to define a hook section 25 and an opening 26. The latch 28, in this example, is elongate comprising a lock end 28a extending from a pivot point 72, and an actuating end 28b extending from the pivot point 72 in an opposite direction to the lock end 28a, such that the pivot point 72 is located in a central portion of the latch 28. The latch 28 is pivotably coupled to the hook body 23 at the pivot point 72. The lock end 28a is configured to selectively open and close the opening 26 of the hook body 23 to unlock and lock the latch 28 respectively. The lock end 28a is disposed on the inside of the hook section 25 of the hook body 23 so that it pivots within the hook section 25.

The hook 22 comprises a latch actuator 80 which is disposed in a bore 27 in the hook body 23 and which is configured to control the latch 28 of the hook 22 to lock or unlock (i.e. to close or open the opening 26 respectively). In this example, the latch actuator 80 is a linear actuator pivotably attached to the actuating end 28b of the latch 28 and to the hook body 23. The latch actuator 80 is configured to extend or retract to control the latch 28 to lock or unlock. In other examples, the latch actuator may be a rotary actuator configured to rotate to control the latch to lock or unlock.

In this example, retraction of the latch actuator 80 pivots the latch 28 so that the latch 28 locks to close the opening 26 with the lock end 28a abutting an inside surface of the hook section 25 of the hook body 23. Extension of the latch actuator 80 causes the latch 28 to pivot so that the lock end 28a pivots inwardly in the hook section 25 of the hook body 23, thereby unlocking the latch 28 and opening the opening 26 of the hook body 23.

It will be appreciated that in other examples, the lock end of the latch may be configured to abut an outer surface of the hook section of the hook body and pivot away from the hook body to unlock. In some examples extension of the latch actuator may result in locking the latch and retraction of the latch actuator may result in unlocking the latch. In other examples, the latch may be elongate and may be pivotably attached to the hook body such that only a single end extends from the pivot point, with the latch actuator pivotably attached to that single end to control the latch to lock or unlock.

**Figure 5** shows an example fluid circuit 600 for controlling the latch actuator 80 of the hookloader 10, 100, 200, 300, which in this example is a single acting latch actuator 602. The single acting latch actuator 602 in this example is a linear single acting spring return pneumatic cylinder. It comprises a spring which is configured to bias the actuator in a retracting direction (i.e. to bias in a direction opposing an actuation direction). It will be appreciated that in other examples, the single acting actuator may be a rotary actuator, or may have any suitable biasing mechanism or force to bias the actuator in a direction. In yet further examples, the latch actuator may be a double acting actuator.

Having a single acting latch actuator 602 simplifies the control of the latch 28 since the single acting latch actuator 602 is biased in this example to the retracted position (i.e. to bias the latch 28 to lock), and the solenoid valve only needs to be actuated to unlock the latch 28 by controlling the single acting latch actuator 602 to extend. Further, in the event that the solenoid valve 606 fails, the hook 22 fails to a locked configuration due to the single acting latch actuator 602 which is biased to a retracted position, and the arrangement of the latch actuator 80 and a latch 28 which is configured to lock the latch 28 when the latch actuator 80 is retracted. This makes the hookloader 10, 100, 200, 300 safer to use.

The fluid circuit 600 comprises a pressure source 604 which is fluidically connected to the single acting latch actuator 602 via a first fluid line 610 and a second fluid line 612, parallel to the first fluid line 610. The pressure source 604 is configured to provide pressurised fluid to the single acting latch actuator 602. The fluid circuit 600 further comprises a solenoid valve 606 disposed fluidically between the pressure source 604 and the single acting latch actuator 602 on the first fluid line 610. The solenoid valve 606 is configured to selectively permit fluid flow from the pressure source 604 to the single acting latch actuator 602 through the first fluid line 610. The opening and closing of the solenoid valve is controlled by the controller 32.

The fluid circuit 600 also comprises a manual pushbutton valve 608 disposed fluidically between the pressure source 604 and the single acting latch actuator 602, on the second fluid line 612. The manual pushbutton valve 608 is configured to selectively permit fluid flow from the pressure source 604 to the single acting latch actuator 602 through the second fluid line 612, and is manually actuated by an operator.

Having a manual pushbutton valve 608 in the second fluid line 612 parallel to the first fluid line 610 enables a manual override of the fluid circuit 600 to unlock the latch 28. This may be useful in the event of failure of the solenoid valve 606, or the controller 32, such that the automatic control of the solenoid valve 606 fails to unlock the latch 28 by extending the single acting latch actuator 602.

A shuttle valve 614 is disposed at a point where the first fluid line 610 and the second fluid line 612 meet. The shuttle valve 614 is therefore disposed between the solenoid valve 606 and the single acting latch actuator 602, and between the manual pushbutton valve 608 and the single acting latch actuator 602. The shuttle valve 614 permits fluid to flow through it from one of two sources i.e. from either the first fluid line 610 or the second fluid line 612.

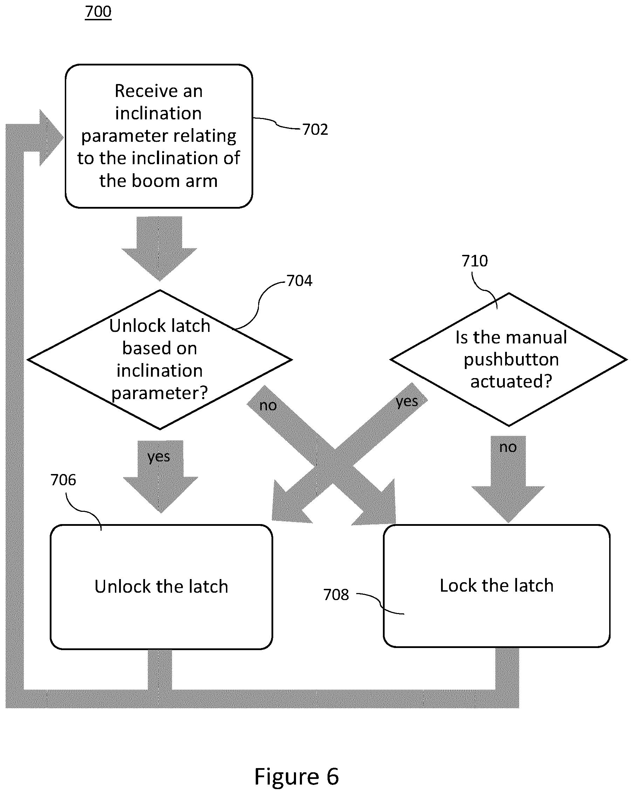

Control of the solenoid valve 606 will be described in more detail with reference to Figure 6 below. It will be appreciated that in some examples, the automatic control of the single acting latch actuator can be achieved without the second fluid line 612 and the pushbutton valve.

**Figure 6** is a flow chart showing steps of a method 700 for operating the hookloader 10, 100, 200, 300.

In block 702 of the method 700, an inclination parameter is received relating to the inclination of the boom arm 18. In this example, the inclination parameter is received from the inclination switch 30 mounted to the boom arm 18. In this example, the inclination switch 30 is configured to output a digital signal.

In block 704, the controller 32 determines whether the latch 28 should be unlocked based on the received inclination parameter. In this example, the inclination parameter is provided by the inclination switch 30 which outputs a LOW or HIGH signal. The inclination switch may be calibrated to output a LOW signal between -45° and a threshold α°, and to output a HIGH signal between the threshold α° and 315°, where a 0° line 85 (best shown in Figure 1) is parallel with the chassis 14 in a direction from the back to the front of the chassis 14 (i.e. from right to the left in the Figures). A positive angle is in a clockwise direction from the 0° line 85 and a negative angle is in an anticlockwise direction from the 0° line 85.

In this example, the controller 32 is configured to determine that the latch 28 should be unlocked when it receives a HIGH signal, and to determine that the latch 28 should be locked when it receives a LOW signal. If the controller determines that the latch should be unlocked, the method moves to block 706 in which the latch 28 is unlocked by controlling the solenoid valve 606 to open, thus providing pressurised fluid to the single acting latch actuator 602, to extend the single acting latch actuator 602 to unlock the latch 28. The method then moves back to block 702 to begin again.

In other examples, there may be no controller. For example, the inclination switch outputting a digital signal may directly control the solenoid valve to open or close based on its output.

If the controller determines that the latch 28 should not be unlocked (i.e. the latch 28 should be locked), the method moves to block 708 to lock the latch 28 by controlling the solenoid valve 606 to close.

At the same time as blocks 702-708, a determination is made of whether the manual pushbutton 608 is actuated in block 710. If it is determined that the manual pushbutton 608 is actuated, the method moves to block 706 to unlock the latch. This therefore acts as an override to control the latch 28 to unlock, by permitting flow of pressurised fluid to the single acting latch actuator 602 through the second fluid line 612, regardless of the inclination parameter.

In this example, actuation of the manual pushbutton 608 manually opens the second fluid line 612 so that pressurised fluid can be provided from the pressure source 604 to the single acting latch actuator 602 via the second fluid line 612 to unlock the latch. In other examples, the manual pushbutton may send an override signal to the controller to control the solenoid valve or another valve in the second fluid line to unlock the latch.

If the manual pushbutton 608 is not actuated, the method moves to block 708 in which the latch 28 is locked. In this example, the controller 32 controls the solenoid valve 606 to close in block 708, such that no more pressurised fluid is provided to the single acting latch actuator 602 through the solenoid valve 606, thereby permitting retraction of the single latch acting actuator 602 by the spring, to lock the latch 28. Once the latch 28 is locked in block 708, the method moves back to block 702 to begin again.

In this example, the method 700 has two routes to unlock the latch 28, such that the system is always in a waiting state for a signal to unlock the latch 28 for either the manual pushbutton 608 or the inclination parameter. In the absence of a signal to unlock the latch 28, the solenoid valve remains closed. Although the method 700 has been described as receiving an inclination parameter from an inclination switch, it will be appreciated that the method can be carried out by receiving an inclination parameter relating to inclination of the boom arm 18 from any suitable sensor. In some examples, where the inclination parameter is provided by an analogue sensor, such as an inclinometer, an inductive sensor, or an extension sensor, the received inclination parameter may be compared to a threshold, and the controller may control the latch to unlock based on the comparison to the threshold. In yet further examples, where the sensor is an inclinometer on the boom arm, the inclination parameter may be calibrated by a second inclinometer on the chassis before being received by the controller, and compared to a threshold.

## Claims

1. A method (700) of operating a hookloader (10, 100, 200, 300), the hookloader (10, 100, 200, 300) comprising a chassis (14) for receiving a container (12), a boom arm (18) pivotably moveable with respect to the chassis (14), with a linear actuator (20) disposed therebetween and actuatable to pivot the boom arm (18), the boom arm (18) comprising a hook (22) having a hook body (23) defining an opening (26) for hooking the container (12), the hook (22) comprising a latch (28) configured to lock to close the opening (26) of the hook (22), or to unlock to open the opening (26) of the hook (22), the method (700) **characterised by** comprising:
receiving an inclination parameter, from a sensor (30), relating to the inclination of the boom arm (18); and
controlling the latch (28) of the hook (22) to lock or unlock based on the inclination parameter.

2. A method (700) according to claim 1, wherein the latch (28) is controlled by actuation of a latch actuator (80).

3. A method (700) according to claim 2, wherein controlling the latch (28) comprises controlling the latch actuator (80) to extend or retract or controlling the latch actuator (80) to rotate.

4. A method (700) according to any preceding claim, wherein the inclination parameter is received from an inclination switch mounted on the boom arm (18) which is configured to output a digital signal.

5. A method (700) according to any of claims 1-3, wherein the inclination parameter is received from an inclination sensor (30) mounted on the boom arm (18).

6. A method (700) according to claim 5, wherein the inclination parameter is a first inclination parameter, and wherein the method (700) includes receiving a second inclination parameter relating to the inclination of the chassis (14), and wherein the first inclination parameter is calibrated based on the second inclination parameter to identify the inclination of the boom arm (18) relative to the chassis (14).

7. A method (700) according to any of claims 1-3, wherein the inclination parameter is received from an inductive sensor (60) mounted to the chassis (14) or wherein the inclination parameter is received from an extension sensor (50) in the linear actuator (20) configured to output a signal indicative of the extension of the linear actuator (20).

8. A method (700) according to any preceding claim, wherein the linear actuator (20) is a hydraulic cylinder.

9. A hookloader (10, 100, 200, 300) comprising:
a chassis (14) for receiving a container (12), and
a boom arm (18) pivotably coupled to the chassis (14), with a linear actuator (20) disposed between the chassis (14) and the boom arm (18) and actuatable to pivot the boom arm (18), the boom arm (18) comprising a hook (22) having a hook body (23) defining an opening (26) for hooking the container (12), the hook (22) comprising a latch (28) which is configured to lock to close the opening (26) of the hook (22), and to unlock to open the opening (26) of the hook (22); **characterised by**:
a sensor (30) configured to generate an inclination parameter relating to the inclination of the boom arm (18); and
a controller (32) configured to operate the hookloader (10, 100, 200, 300) using the method (700) according to any preceding claim.

10. A hookloader (10, 100, 200, 300) according to claim 9, wherein the hook (22) comprises a latch actuator (80) which is configured to extend and retract to control the latch (28) to lock or unlock.

11. A hookloader (10, 100, 200, 300) according to claim 10, wherein the latch (28) is elongate and pivotably coupled to the hook body (23) at a central portion of the latch (28), and wherein the latch (28) is pivotably attached to the latch actuator (80) at a first end of the latch (28), and a second end of the latch (28) is configured to close the opening (26) of the hook (22), such that extension of the latch actuator (80) unlocks the latch (28), and retraction of the latch actuator (80) locks the latch (28).

12. A hookloader (10, 100, 200, 300) according to claim 9, wherein the hook (22) comprises a latch actuator (80) which is configured to rotate to control the latch (28) to lock or unlock.

13. A hookloader (10, 100, 200, 300) according to any of claims 9-12, comprising an inclination switch mounted on the boom arm (18), and configured to generate the inclination parameter or comprising an inductive sensor (60) mounted to the chassis (14) configured to generate the inclination parameter or comprising an extension sensor (50) mounted in the linear actuator (20) which is configured to output a signal indicative of the extension of the linear actuator (20) to generate the inclination parameter.

14. A hookloader (10, 100, 200, 300) according to any of claims 9-12, comprising an inclination sensor (30) mounted on the boom arm (18), and configured to generate the inclination parameter.

15. A hookloader (10, 100, 200, 300) according to claim 14, wherein the controller (32) is configured to control the hookloader (10, 100, 200, 300) using the method (700) according to claim 6, wherein the inclination sensor (30) is a first inclinometer configured to generate the first inclination parameter, and comprising a second inclinometer mounted on the chassis (14) and configured to generate the second inclination parameter relating to the inclination of the chassis (14).

## Patentansprüche

1. Verfahren (700) zum Betreiben eines Hakenladers (10, 100, 200, 300), wobei der Hakenlader (10, 100, 200, 300) ein Fahrgestell (14) zum Empfangen eines Behälters (12), einen Auslegerarm (18), der mit Bezug auf das Fahrgestell (14) schwenkbar bewegbar ist, mit einem Linearaktuator (20), der dazwischen angeordnet und betätigbar ist, um den Auslegerarm (18) zu schwenken, umfasst, wobei der Auslegerarm (18) einen Haken (22) mit einem Hakenkörper (23), der eine Öffnung (26) definiert, zum Einhaken des Behälters (12) umfasst, wobei der Haken (22) eine Klinke (28) umfasst, die dazu ausgelegt ist, verriegelt zu werden, um die Öffnung (26) des Hakens (22) zu schließen, oder entriegelt zu werden, um die Öffnung (26) des Hakens (22) zu öffnen, wobei das Verfahren (700) **dadurch gekennzeichnet ist, dass** es Folgendes umfasst:
Empfangen eines Neigungsparameters, der die Neigung des Auslegerarms (18) betrifft, von einem Sensor (30) und
Steuern der Klinke (28) des Hakens (22) zum Verriegeln oder Entriegeln auf Basis des Neigungsparameters.

2. Verfahren (700) nach Anspruch 1, wobei die Klinke (28) durch Betätigen eines Klinkenaktuators (80) gesteuert wird.

3. Verfahren (700) nach Anspruch 2, wobei das Steuern der Klinke (28) das Steuern des Klinkenaktuators (80) zum Ausfahren oder Einfahren oder das Steuern des Klinkenaktuators (80) zum Drehen umfasst.

4. Verfahren (700) nach einem der vorhergehenden Ansprüche, wobei der Neigungsparameter von einem Neigungsschalter empfangen wird, der am Auslegerarm (18) montiert und dazu ausgelegt ist, ein digitales Signal auszugeben.

5. Verfahren (700) nach einem der Ansprüche 1-3, wobei der Neigungsparameter von einem Neigungssensor (30) empfangen wird, der am Auslegerarm (18) montiert ist.

6. Verfahren (700) nach Anspruch 5, wobei der Neigungsparameter ein erster Neigungsparameter ist und wobei das Verfahren (700) das Empfangen eines zweiten Neigungsparameters beinhaltet, der die Neigung des Fahrgestells (14) betrifft, und wobei der erste Neigungsparameter auf Basis des zweiten Neigungsparameters kalibriert wird, um die Neigung des Auslegerarms (18) relativ zum Fahrgestell (14) zu identifizieren.

7. Verfahren (700) nach einem der Ansprüche 1-3, wobei der Neigungsparameter von einem induktiven Sensor (60) empfangen wird, der am Fahrgestell (14) montiert ist, oder wobei der Neigungsparameter von einem Erstreckungssensor (50) im Linearaktuator (20) empfangen wird, der dazu ausgelegt ist, ein Signal auszugeben, das die Erstreckung des Linearaktuators (20) anzeigt.

8. Verfahren (700) nach einem der vorhergehenden Ansprüche, wobei der Linearaktuator (20) ein Hydraulikzylinder ist.

9. Hakenlader (10, 100, 200, 300), der Folgendes umfasst:
ein Fahrgestell (14) zum Empfangen eines Behälters (12) und
einen Auslegerarm (18), der schwenkbar an das Fahrgestell (14) gekoppelt ist, mit einem Linearaktuator (20), der zwischen dem Fahrgestell (14) und dem Auslegerarm (18) angeordnet und betätigbar ist, um den Auslegerarm (18) zu schwenken, wobei der Auslegerarm (18) einen Haken (22) mit einem Hakenkörper (23), der eine Öffnung (26) definiert, zum Einhaken des Behälters (12) umfasst, wobei der Haken (22) eine Klinke (28) umfasst, die dazu ausgelegt ist, verriegelt zu werden, um die Öffnung (26) des Hakens (22) zu schließen, und entriegelt zu werden, um die Öffnung (26) des Hakens (22) zu öffnen, **gekennzeichnet durch**:
einen Sensor (30), der dazu ausgelegt ist, einen Neigungsparameter zu erzeugen, der die Neigung des Auslegerarms (18) betrifft; und
eine Steuerung (32), die dazu ausgelegt ist, den Hakenlader (10, 100, 200, 300) unter Verwendung des Verfahrens (700) nach einem der vorhergehenden Ansprüche zu betreiben.

10. Hakenlader (10, 100, 200, 300) nach Anspruch 9, wobei der Haken (22) einen Klinkenaktuator (80) umfasst, der dazu ausgelegt ist, auszufahren und einzufahren, um die Klinke (28) zum Verriegeln oder Entriegeln zu steuern.

11. Hakenlader (10, 100, 200, 300) nach Anspruch 10, wobei die Klinke (28) länglich und an einem Mittenabschnitt der Klinke (28) schwenkbar an den Hakenkörper (23) gekoppelt ist und wobei die Klinke (28) an einem ersten Ende der Klinke (28) schwenkbar am Klinkenaktuator (80) befestigt ist und ein zweites Ende der Klinke (28) dazu ausgelegt ist, die Öffnung (26) des Hakens (22) zu schließen, derart, dass ein Ausfahren des Klinkenaktuators (80) die Klinke (28) entriegelt und ein Einfahren des Klinkenaktuators (80) die Klinke (28) verriegelt.

12. Hakenlader (10, 100, 200, 300) nach Anspruch 9, wobei der Haken (22) einen Klinkenaktuator (80) umfasst, der dazu ausgelegt ist, sich zu drehen, um die Klinke (28) zum Verriegeln oder Entriegeln zu steuern.

13. Hakenlader (10, 100, 200, 300) nach einem der Ansprüche 9-12, der einen Neigungsschalter umfasst, der am Auslegerarm (18) montiert und dazu ausgelegt ist, den Neigungsparameter zu erzeugen, oder einen induktiven Sensor (60) umfasst, der am Fahrgestell (14) montiert und dazu ausgelegt ist, den Neigungsparameter zu erzeugen, oder einen Erstreckungssensor (50) umfasst, der im Linearaktuator (20) montiert und dazu ausgelegt ist, ein Signal auszugeben, das die Erstreckung des Linearaktuators (20) anzeigt, um den Neigungsparameter zu erzeugen.

14. Hakenlader (10, 100, 200, 300) nach einem der Ansprüche 9-12, der einen Neigungssensor (30) umfasst, der am Auslegerarm (18) montiert und dazu ausgelegt ist, den Neigungsparameter zu erzeugen.

15. Hakenlader (10, 100, 200, 300) nach Anspruch 14, wobei die Steuerung (32) dazu ausgelegt ist, den Hakenlader (10, 100, 200, 300) unter Verwendung des Verfahrens (700) nach Anspruch 6 zu steuern, wobei der Neigungssensor (30) ein erster Neigungsmesser ist, der dazu ausgelegt ist, den ersten Neigungsparameter zu erzeugen, und einen zweiten Neigungsmesser umfasst, der am Fahrgestell (14) montiert und dazu ausgelegt ist, den zweiten Neigungsparameter zu erzeugen, der die Neigung des Fahrgestells (14) betrifft.

## Revendications

1. Procédé (700) de fonctionnement d'un chargeur à crochet (10, 100, 200, 300), le chargeur à crochet (10, 100, 200, 300) comprenant un châssis (14) pour recevoir un conteneur (12), un bras de flèche (18) mobile de façon pivotante par rapport au châssis (14), avec un actionneur linéaire (20) disposé entre ceux-ci et actionnable pour faire pivoter le bras de flèche (18), le bras de flèche (18) comprenant un crochet (22) ayant un corps de crochet (23) définissant une ouverture (26) pour s'accrocher au conteneur (12), le crochet (22) comprenant un dispositif de verrouillage (28) configuré pour se verrouiller pour fermer l'ouverture (26) du crochet (22), ou pour se déverrouiller pour ouvrir l'ouverture (26) du crochet (22), le procédé (700) étant **caractérisé en ce qu'**il comprend :
la réception d'un paramètre d'inclinaison, à partir d'un capteur (30), concernant l'inclinaison du bras de flèche (18) ; et
la commande du dispositif de verrouillage (28) du crochet (22) pour qu'il se verrouille ou se déverrouille sur la base du paramètre d'inclinaison.

2. Procédé (700) selon la revendication 1, dans lequel le dispositif de verrouillage (28) est commandé par actionnement d'un actionneur de dispositif de verrouillage (80).

3. Procédé (700) selon la revendication 2, dans lequel la commande du dispositif de verrouillage (28) comprend la commande de l'actionneur de dispositif de verrouillage (80) pour s'étendre ou se rétracter ou la commande de l'actionneur de dispositif de verrouillage (80) pour qu'il entre en rotation.

4. Procédé (700) selon une quelconque revendication précédente, dans lequel le paramètre d'inclinaison est reçu à partir d'un commutateur d'inclinaison monté sur le bras de flèche (18) qui est configuré pour produire en sortie un signal numérique.

5. Procédé (700) selon l'une quelconque des revendications 1 à 3, dans lequel le paramètre d'inclinaison est reçu à partir d'un capteur d'inclinaison (30) monté sur le bras de flèche (18).

6. Procédé (700) selon la revendication 5, dans lequel le paramètre d'inclinaison est un premier paramètre d'inclinaison, et dans lequel le procédé (700) inclut la réception d'un second paramètre d'inclinaison concernant l'inclinaison du châssis (14), et dans lequel le premier paramètre d'inclinaison est calibré sur la base du second paramètre d'inclinaison pour identifier l'inclinaison du bras de flèche (18) relativement au châssis (14).

7. Procédé (700) selon l'une quelconque des revendications 1 à 3, dans lequel le paramètre d'inclinaison est reçu à partir d'un capteur inductif (60) monté sur le châssis (14) ou dans lequel le paramètre d'inclinaison est reçu à partir d'un capteur d'extension (50) dans l'actionneur linéaire (20) configuré pour produire en sortie un signal indicatif de l'extension de l'actionneur linéaire (20).

8. Procédé (700) selon une quelconque revendication précédente, dans lequel l'actionneur linéaire (20) est un vérin hydraulique.

9. Chargeur à crochet (10, 100, 200, 300), comprenant
un châssis (14) pour recevoir un conteneur (12), et
un bras de flèche (18) couplé de façon pivotante au châssis (14), avec un actionneur linéaire (20) disposé entre le châssis (14) et le bras de flèche (18) et actionnable pour faire pivoter le bras de flèche (18), le bras de flèche (18) comprenant un crochet (22) ayant un corps de crochet (23) définissant une ouverture (26) pour s'accrocher au conteneur (12), le crochet (22) comprenant un dispositif de verrouillage (28) qui est configuré pour se verrouiller pour fermer l'ouverture (26) du crochet (22), et pour se déverrouiller pour ouvrir l'ouverture (26) du crochet (22) ; **caractérisé par**
un capteur (30) configuré pour générer un paramètre d'inclinaison concernant l'inclinaison du bras de flèche (18) ; et
une unité de commande (32) configurée pour faire fonctionner le chargeur à crochet (10, 100, 200, 300) en utilisant le procédé (700) selon une quelconque revendication précédente.

10. Chargeur à crochet (10, 100, 200, 300) selon la revendication 9, dans lequel le crochet (22) comprend un actionneur de dispositif de verrouillage (80) qui est configuré pour s'étendre et se rétracter pour commander le dispositif de verrouillage (28) pour qu'il se verrouille ou se déverrouille.

11. Chargeur à crochet (10, 100, 200, 300) selon la revendication 10, dans lequel le dispositif de verrouillage (28) est allongé et couplé de façon pivotante au corps de crochet (23) dans une partie centrale du dispositif de verrouillage (28), et dans lequel le dispositif de verrouillage (28) est fixé de façon pivotante à l'actionneur de dispositif de verrouillage (80) à une première extrémité du dispositif de verrouillage (28), et une seconde extrémité du dispositif de verrouillage (28) est configurée pour fermer l'ouverture (26) du crochet (22), de telle sorte que l'extension de l'actionneur de dispositif de verrouillage (80) déverrouille le dispositif de verrouillage (28), et la rétraction de l'actionneur de dispositif de verrouillage (80) verrouille le dispositif de verrouillage (28).

12. Chargeur à crochet (10, 100, 200, 300) selon la revendication 9, dans lequel le crochet (22) comprend un actionneur de dispositif de verrouillage (80) qui est configuré pour entrer en rotation pour commander le dispositif de verrouillage (28) pour qu'il se verrouille ou se déverrouille.

13. Chargeur à crochet (10, 100, 200, 300) selon l'une quelconque des revendications 9 à 12, comprenant un commutateur d'inclinaison monté sur le bras de flèche (18), et configuré pour générer le paramètre d'inclinaison ou comprenant un capteur inductif (60) monté sur le châssis (14) configuré pour générer le paramètre d'inclinaison ou comprenant un capteur d'extension (50) monté dans l'actionneur linéaire (20) qui est configuré pour produire en sortie un signal indicatif de l'extension de l'actionneur linéaire (20) pour générer le paramètre d'inclinaison.

14. Chargeur à crochet (10, 100, 200, 300) selon l'une quelconque des revendications 9 à 12, comprenant un capteur d'inclinaison (30) monté sur le bras de flèche (18), et configuré pour générer le paramètre d'inclinaison.

15. Chargeur à crochet (10, 100, 200, 300) selon la revendication 14, dans lequel l'unité de commande (32) est configurée pour commander le chargeur à crochet (10, 100, 200, 300) en utilisant le procédé (700) selon la revendication 6, dans lequel le capteur d'inclinaison (30) est un premier inclinomètre configuré pour générer le premier paramètre d'inclinaison, et comprenant un second inclinomètre monté sur le châssis (14) et configuré pour générer le second paramètre d'inclinaison concernant l'inclinaison du châssis (14).
